# EUROPEAN PATENT APPLICATION

(11) **EP 1 467 389 A1**
(43) Date of publication of application: **13.10.2004**
(21) Application number: 02790917.5
(22) Date of filing: 27.12.2002
(51) Int. Cl.: H01H 13/70, H01H 11/00, B29C 45/14

(54) **KEY SHEET MEMBER AND ITS PRODUCTION METHOD**

(30) Priority: 28.12.2001 JP 2001400612; 22.01.2002 JP 2002012643; 25.02.2002 JP 2002047524
(71) Applicant: NISSHA PRINTING CO., LTD., Nakagyo-ku Kyoto-shi Kyoto 604-8551 (JP)
(72) Inventor: SHIGETA, Hiroyasu, c/o NISSHA PRINTING CO., LTD., Kyoto-shi, Kyoto 604-8551 (JP)
(74) Representative: HOFFMANN - EITLE
(86) International application number: PCT/JP2002/013751
(87) International publication number: WO 2003/058660

(57) **Abstract**

A decoration sheet (2), in which at least a metal thin film layer (7) is laminated on the back surface side of a translucent substrate sheet (3) that has a visible light transmittance of 80 to 93% and a haze of 5 to 50%, is constructed so as to be integrated with a plurality of transparent resin members (11) that become button sections (19).

## Description

### Technical Field

The present invention relates to a key sheet member for facilitating the recognition of translucent pattern sections of characters, symbols and so on by illuminating them even in the nighttime or a dark room by irradiation from a back surface by means of a light source and a manufacturing method therefor and relates to a key sheet member including a multipoint input key of a portable telephone or the like and a manufacturing method therefor. The present invention can be applied to pushbutton switches and so on of home electric appliances, automobile components, business equipment and telecommunications equipment besides portable telephones.

### Background Art

In order to improve the visibility of characters and symbols when the pushbutton switches of portable telephones and the like are backlighted, there have been a demand for providing a key sheet member that expresses the characters and symbols by forming a light-shielding decoration layer partially into character patterns with a light-transmitting decoration layer served as a ground and a demand for providing a key sheet member that has luxurious feeling by making the light-transmitting decoration layer have a metallic luster with gloss somewhat suppressed.

As a method for obtaining a key sheet member of the aforementioned construction, there has been a method for plating the surface of a resin material molded by means of molding dies that have a cavity surface on which minute pits and projections are provided and subsequently bonding a plurality of button sections, which have been formed by overcoating a transparent resin by a spray coating method or the like, onto a plastic sheet.

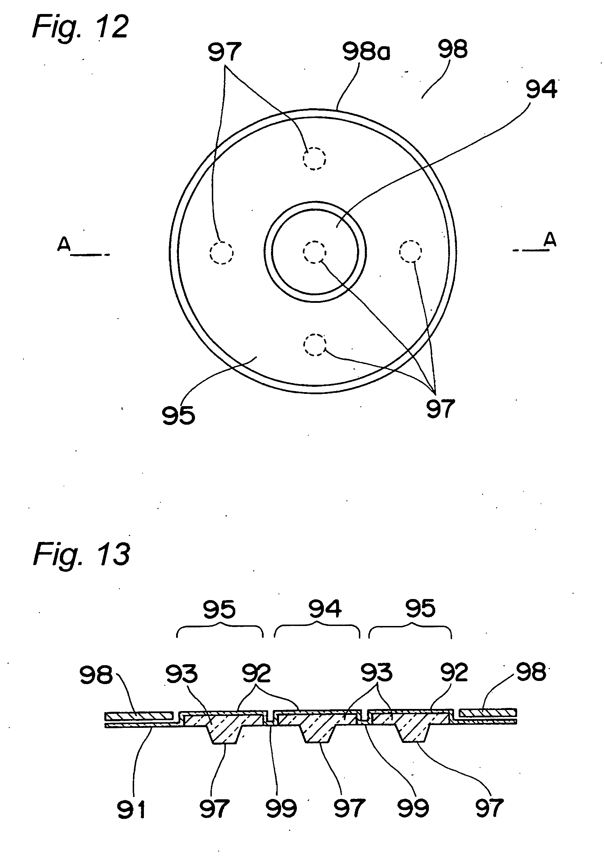

Moreover, there have conventionally been adopted multicontact keys called the multi-function keys or multi-scroll keys capable of accepting multi-directional inputs in upward, downward, rightward, leftward and other directions in portable telephones and so on. Normally, these keys constitute a key sheet member 91 that has a center key capable of accepting a depthwise input independently at the center. For example, the multicontact key shown in Fig. 12 is constituted of a circular center key 94 constructed of a protruding section 92 exposed from an opening 98a of a casing 98, a frame-shaped key 95 constructed of a frame-shaped protruding section 92 that has an annular or another shape concentrically surrounding the center key, and a connection section 99 that connects the protruding section 92 of the center key with the protruding section 92 of the frame-shaped key. A total of five contact depressing sections 97 constructed of resin members 93 are provided on the back side of both the keys 94 and 95.

This conventional key sheet member, whose overcoat layer is formed of coating, has had an issue that the surface strength of the button sections has been insufficient and the metallic luster pattern of the portions frequently touched during long-term use has been impaired. There has been a further issue that control for obtaining the desired matted pattern or hairline pattern metallic luster has been difficult due to variation in the plating process.

Accordingly, the object of the present invention is to solve the aforementioned issues and provide a key sheet member that has excellent surface strength and a uniform metallic luster and a manufacturing method therefor.

### Disclosure Of Invention

In accomplishing the aforementioned object, the present invention is constructed as follows.

According to a first aspect of the present invention, there is provided a key sheet member which can be obtained by setting a decoration sheet in a prescribed position, preforming the sheet into a three dimensional configuration so that the sheet is protruded on a translucent substrate sheet side and a plurality of key button sections are formed, subsequently placing the sheet in molding dies and injecting a molten resin to integrate the transparent molten resin comprised of the plurality of key button sections with the decoration sheet,
the key sheet member being integrated with the plurality of transparent resin sections that become the key button sections in which at least a metal thin film layer is laminated on a back surface side of the translucent substrate sheet that has a visible light transmittance of 80 to 93% and a haze of 5 to 50%.

However, with regard to the multicontact key, when the translucent substrate sheet is made of biaxially oriented polyethylene terephthalate or the like having no deep drawing characteristic, it is sometimes the case where the translucent substrate sheet is forcibly extended in the preforming stage and becomes thin to break or, if the thickness is increased so as to cause no break, it is sometimes the case where a long time is required until heating to an optimum preforming state, resulting in a degraded production efficiency.

Therefore, the following second aspect of the present invention is preferable when there is a multicontact key.

That is, according to the second aspect of the present invention, there is provided the key sheet member as defined in the first aspect, wherein the translucent substrate sheet is a resin film that has a thickness of 50 to 250 µm and is selected from a group consisting of polyamide, polyimide, olefin, urethane, polycarbonate/polybutylene terephthalate alloy resin, and polycarbonate/polyethylene terephthalate alloy resin; and an extension rate of the decoration sheet preformed so that the key button sections are formed in a three dimensional configuration falls within a range of 200 to 300%.

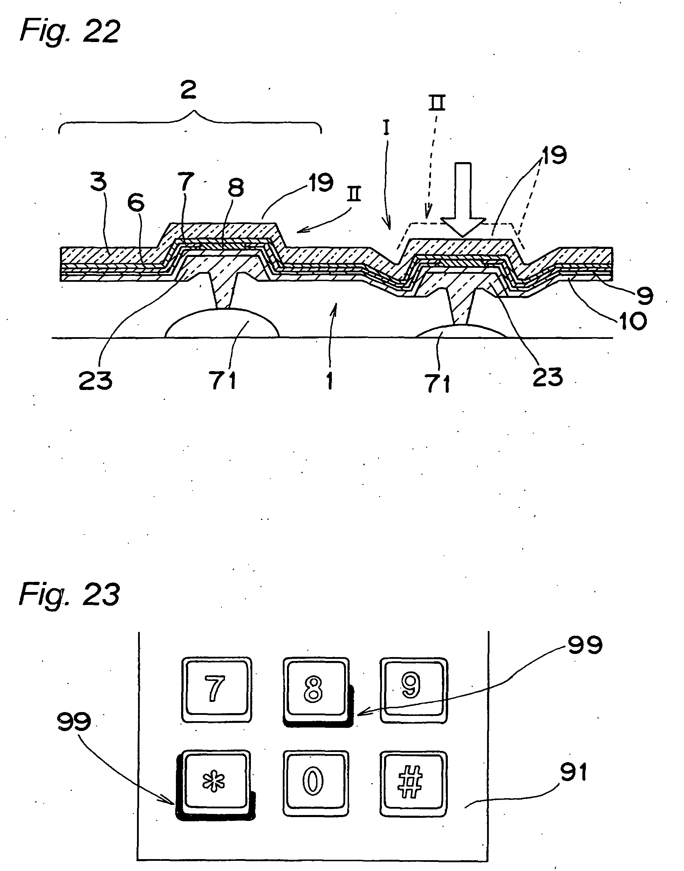

However, if a key sheet member to be frequently used as in a portable telephone is formed by printing on a substrate sheet, there still occasionally occurs a trouble that the mechanical characteristics of the substrate sheet deteriorate due to repetitive bending actions and the effects of a printing solvent during long-term use and cracks are generated at the peripheries of the key button sections of the decoration sheet (see the reference numeral 99 in Fig. 23).

In the above case, according to the third aspect of the present invention, there is provided the key sheet member as defined in the second aspect, wherein the key button sections are reinforced by being backed with a rubber elastic layer in a vicinity of peripheries thereof.

In concrete, according to the fourth aspect of the present invention, there is provided the key sheet member as defined in the third aspect, wherein the rubber elastic layer is comprised of a mold resin layer and positioned so as to extend over outside portions of peripheries of the key button sections of the decoration sheet and a back surface of a molded piece for.maintaining a configuration of the button.

Further, according to the fifth aspect of the present invention, there is provided the key sheet member as defined in the third aspect, wherein the rubber elastic layer is comprised of a printed layer and positioned so as to extend over outside portions of peripheries and inside portions of peripheries of the key button sections of the decoration sheet on a surface located on a patterned layer side of the substrate sheet.

According to the sixth aspect of the present invention, there is provided the key sheet member as defined in any one of the first through fifth aspects, wherein the translucent substrate sheet contains one to thirty percent by weight of a light diffusion material.

According to the seventh aspect of the present invention, there is provided the key sheet member as defined in the sixth aspect, wherein the translucent substrate sheet is laminated with a light diffusion layer that contains one to thirty percent by weight of a light diffusion material on an upper surface side of a transparent substrate sheet.

According to the eighth aspect of the present invention, there is provided the key sheet member as defined in any one of the first through fifth aspects, wherein the metal thin film layer has a visible light transmittance of one to thirty percent and is formed partially or overall.

According to the ninth aspect of the present invention, there is provided the key sheet member as defined in the seventh aspect, wherein the light diffusion layer is formed on the decoration sheet, and a visible light transmittance of three layers of the translucent substrate sheet, the metal thin film layer, and the light diffusion layer falls within a range of 10 to 30%.

According to the 10th aspect of the present invention, there is provided the key sheet member as defined in any one of the first through fifth aspects, wherein the translucent substrate sheet has a minute pits-and-projections portion on the surface thereof.

### Brief Description Of Drawings

These and other aspects and features of the present invention will become clear from the following description taken in conjunction with the preferred embodiments thereof with reference to the accompanying drawings, in which:
Fig. 1 is a sectional view showing a key sheet member according to a first embodiment of the present invention;
Fig. 2 is a sectional view showing a decoration sheet used for a method for manufacturing the key sheet member of the first embodiment of the present invention;
Fig. 3 is a sectional view showing a decoration sheet used for a method for manufacturing a key sheet member according to a modification example of the first embodiment of the present invention;
Fig. 4 is a sectional view showing a decoration sheet used for the manufacturing method of the key sheet member of the first embodiment of the present invention;
Fig. 5 is a sectional view showing one process of the manufacturing method of the key sheet member of the first embodiment of the present invention;
Fig. 6 is a sectional view showing one process of the manufacturing method of the key sheet member of the first embodiment of the present invention;
Fig. 7 is a sectional view showing a multicontact key sheet member according to the first embodiment of the present invention;
Figs. 8A and 8B are views for explaining a suction die for producing an evaluation sample for use in fabricating a key sheet member for evaluation and a sectional view taken along the line VIII-VIII in Fig. 8A, respectively;
Fig. 9 is a sectional view for explaining a process for fabricating the key sheet member for evaluation;
Fig. 10 is a sectional view for explaining a process for fabricating the key sheet member for evaluation;
Fig. 11 is a view for explaining an evaluation method by means of the key sheet member for evaluation;
Fig. 12 is a plan view showing one example of the multicontact key;
Fig. 13 is a sectional view taken along the line A-A of the multicontact key of Fig. 12;
Fig. 14 is a sectional view showing the key sheet member according to the first embodiment of the present invention;
Fig. 15 is a sectional view showing a decoration sheet three-dimensionally molded in the manufacturing process of the key sheet member of Fig. 14;
Fig. 16 is a sectional view showing one process of the manufacturing method of the key sheet member of Fig. 14;
Fig. 17 is a sectional view showing a decoration sheet that is bonded to and integrated with molded pieces for maintaining a button configuration in the manufacturing process of the key sheet member of Fig. 14;
Fig. 18 is a sectional view showing one process of the manufacturing method of the key sheet member of Fig. 14;
Fig. 19 is a sectional view showing a key sheet member according to the first embodiment of the present invention;
Fig. 20 is a sectional view showing a decoration sheet three-dimensionally molded in the manufacturing process of the key sheet member of Fig. 19;
Fig. 21 is a sectional view showing one process of the manufacturing method of the key sheet member of Fig. 19;
Fig. 22 is a sectional view showing the key sheet member of the first embodiment of the present invention; and
Fig. 23 is a view showing a trouble of a key sheet member according to a prior art.

### Best Mode for Carrying Out the Invention

Before the description of the present invention proceeds, it is to be noted that like parts are designated by like reference numerals throughout the accompanying drawings.

Embodiments of the present invention will be described in detail with reference to the drawings.

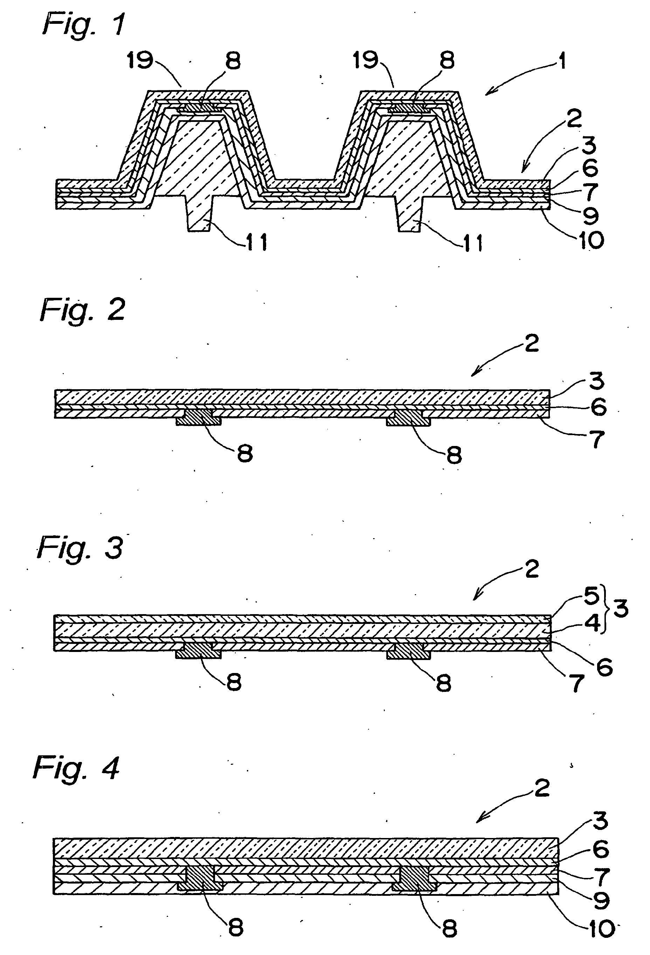

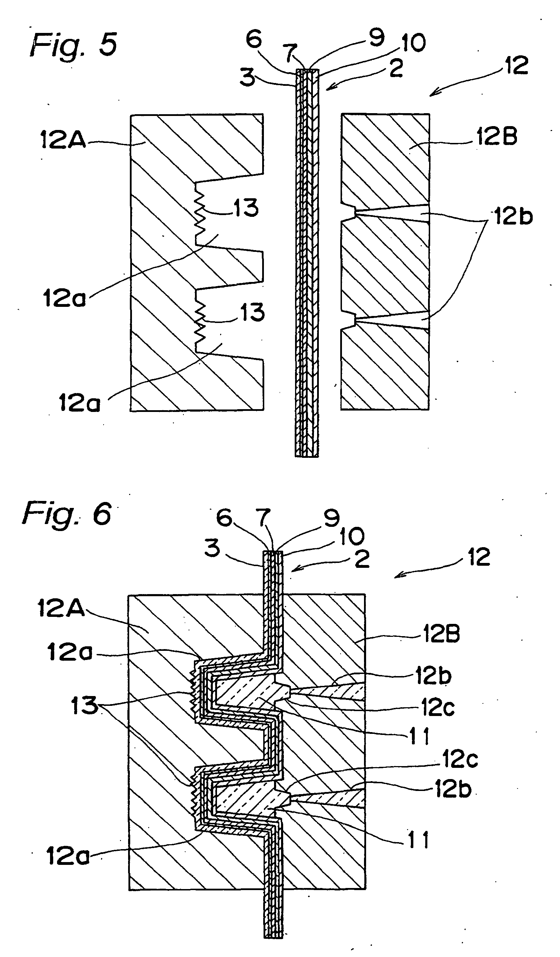

Fig. 1 is a sectional view showing the key sheet member according to the first embodiment of the present invention. Fig. 2 is a sectional view showing the decoration sheet used for the method for manufacturing the key sheet member of the first embodiment of the present invention. Fig. 3 is a sectional view showing the decoration sheet used for the method for manufacturing the key sheet member according to the modification example of the first embodiment of the present invention. Fig. 4 is a sectional view showing the decoration sheet used for the manufacturing method of the key sheet member of the first embodiment of the present invention. Figs. 5 and 6 are sectional views each showing one process of the manufacturing method of the key sheet member of the first embodiment of the present invention. In the figures, reference numeral 1 denotes a key sheet member having a plurality of key button sections 19, 2 denotes a decoration sheet positioned on the uppermost surface side of the key sheet member 1, 3 a translucent substrate sheet of the decoration sheet 2, 4 a transparent substrate sheet arranged inside the translucent substrate sheet 3, 5 a light diffusion layer arranged on the outer side of the translucent substrate sheet 3, i.e., outside the transparent substrate sheet 4, 6 an anchor layer arranged on the inner surface side of the transparent substrate sheet 4, 7 a metal thin film layer arranged on the outer side of the anchor layer 6, 8 a light-transmitting colored layer arranged on the inner surface of the decoration sheet 2 at the top of the key button section 19 of the key sheet member 1, 9 a light-shielding colored layer arranged on the inner surface of the metal thin film layer 7, 10 a bonding layer arranged on the inner surface of the light-shielding colored layer 9, 11 a transparent resin member that is arranged in a recess portion inside the key button section 19 of the key sheet member 1 and bonded to the bonding layer 10, and 12 metal dies for molding the key sheet member 1.

The key sheet member 1 according to the aforementioned construction is mounted so that each of the key button sections 19 is positioned on a metal dome 71 that is a movable contact arranged above a fixed contact of a push switch. If the key button section 19 is depressed by a finger, then the key button section 19 moves from an undepressed position (see the undepressed position II of Fig. 22) to a depressed position (see the depressed position I of Fig. 22). A contact pressurizing section constructed of the resin member 11 located below the key button section 19 pressurizes the metal dome 71 located on the push switch side to bring the movable contact and the fixed contact into electrical contact with each other, thereby turning on the switch. If the finger is released from the key button section 19, then the contact pressurizing section of the key button section 19 is pushed up by an elastic force of the metal dome 71 to disconnect both the contact points, consequently turning off the switch. Concurrently with this action, the key button section 19 is restored from the depressed position (see the depressed position I of Fig. 22) to the undepressed position (see the undepressed position II of Fig. 22). In this case, the metal dome 71 is, for example, a thin dish-shaped metal contact component that has an outside diameter of about 5 mm, a bending height of about 0.25 mm, and a thickness of about 60 µm and has a click feeling function and a switching function.

With regard to the key sheet member 1 of the first embodiment of the present invention, the decoration sheet 2 constructed by laminating at least the metal thin film layer 7 on the back surface side of the translucent substrate sheet 3, which has a visible light transmittance of 80 to 93% and a haze of 5 to 50%, is integrated with the plurality of transparent resin members 11 that constitute the plurality of key button sections 19 (see Fig. 1).

The decoration sheet 2 is laminated with at least the metal thin film layer 7 via the anchor layer 6 on the back surface side of the translucent substrate sheet 3, which has a visible light transmittance of 80 to 93% and a haze of 5 to 50% (see Figs. 2 through 4). In detail, according to one example, the decoration sheet 2 of the key sheet member 1 of the first embodiment is constructed of the translucent substrate sheet 3, the anchor layer 6, the metal thin film layer 7, the light-transmitting colored layer 8, the light-shielding colored layer 9, and the bonding layer 10 in this order from outside to inside. The translucent substrate sheet 3 is constructed of the transparent substrate sheet 4 and the light diffusion layer 5.

In the key sheet member 1 according to the first embodiment of the present invention, it is important that the translucent substrate sheet 3 has a visible light transmittance of 80 to 93% and a haze of 5 to 50%. As a material of the above-mentioned kind, there is a film fabricated by mixing and kneading a light diffusion material in, for example, the resin of the substrate sheet 3. If the visible light transmittance is within the range of 80 to 93%, an excellent metallic luster of a matted pattern, a hairline pattern or the like can be expressed. If the visible light transmittance falls short of 80%, no metallic luster is reproduced by the metal thin film layer 7. If the visible light transmittance exceeds 93%, minute scratches received on the substrate sheet 3 when the sheet is brought in contact with something tends to be conspicuous. If the haze is within the range of 5 to 50%, an excellent metallic luster of a matted pattern, a hairline pattern, or the like can be expressed. If the haze falls short of 5%, no metallic luster is reproduced by the metal thin film layer 7. If the haze exceeds 50%, light is excessively dispersed during backlighting, and the appearance becomes totally dark.

As the resin of the substrate sheet 3, there can be used a single layer or a laminate of two or more layers of a polyethylene terephthalate based resin, a polycarbonate based resin, an acrylic based resin, an olefin based resin, an urethane based resin, and a polycarbonate/polybutylene terephthalate alloy resin. However, if there is a multicontact key, it is preferable to use a film of a resin selected from the group consisting of polyamide, polyimide, olefin, urethane, a polycarbonate/polybutylene terephthalate alloy resin, and a polycarbonate/polyethylene terephthalate alloy resin.

As the light diffusing material contained in the substrate sheet 3, there can be used minute particles of titanium oxide, aluminum hydroxide, barium sulfate, a polystyrene based resin, and a styrene-methyl methacrylate copolymer based resin; an extender of silica or alumina; resin beads; or the like. The light diffusion material content is preferably one to thirty percent by weight. If the light diffusion material content in the resin of the substrate sheet 3 is within the range of one to thirty percent by weight, an excellent metallic luster of a matted pattern, a hairline pattern, or the like can be expressed. If the light diffusion material content falls short of one percent by weight, the metallic luster feeling is excessively enhanced as a consequence of the shortage of matted feeling and the like. Accordingly, there is concern about the impairment of visibility when a pattern of a character or the like is additionally expressed. If the light diffusion material content exceeds thirty percent by weight, there is concern about no reproduction of metallic luster by the metal thin film layer 7.

Moreover, a sheet with a minute pits-and-projections portion on the sheet surface provided by being put through a space between metal rollers on which the desired minute pits-and-projections configuration is formed during the film fabrication of the substrate sheet 3 can be used as the translucent substrate sheet 3. In this case, the desired minute pits-and-projections portion is the portion that has pits and projections to the extent that the same effects as those in the case where a light diffusion material is included can be obtained, or in concrete, the portion that has a mean surface roughness Ra of 5 to 100 µm. Moreover, the translucent substrate sheet 3 is not limited to the one constructed of a single layer as shown in Fig. 2, and it is acceptable to use a sheet obtained by laminating a light diffusion layer 5 that contains one to thirty percent by weight of a light diffusion material on the surface side of the transparent substrate sheet 4 as the translucent substrate sheet 3 (see Fig. 3).

As the transparent substrate sheet 4, a resin sheet similar to the resin sheet of the translucent substrate sheet 3 can be used. As the resin of the light diffusion layer 5, there can be used an ionizing radiation curing resin, a thermoplastic resin, a thermosetting resin, or the like. As the light diffusion material contained in the resin of the light diffusion layer 5, a material similar to the light diffusion material used in the translucent substrate sheet 3 can be used.

The translucent substrate sheets 3 of Figs. 2 and 3 preferably have a thickness of about 15 to 250 µm. If the thickness of the translucent substrate sheet 3 falls short of 15 µm, the film fabrication process of the translucent substrate sheet 3 becomes difficult and poor at handling in each process. Moreover, the translucent substrate sheet 3 cannot follow the extension thereof in the preforming stage and highly possibly break in a portion of a small thickness. If the thickness of the translucent substrate sheet 3 exceeds 250 µm, a long time will be required until the decoration sheet 2 is heated to an optimum preforming state, leading to a poor production efficiency. Even if the role of the key sheet member 1 as a surface protection layer is taken into consideration, a thickness greater than the above value is unnecessary and leads to a cost increase.

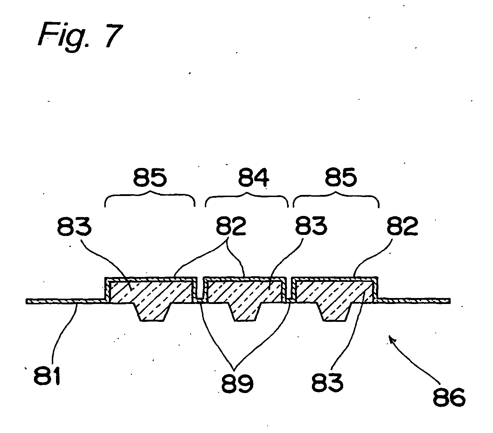

However, when a multicontact key as shown in Fig. 12 is included, it is preferable to set the thickness of the translucent substrate sheet 3 of each of Figs. 2 and 3 to 50 to 250 µm and make the extension rate of the decoration sheet 2 on which the key button sections 19 are formed fall within a range of 200 to 300% for the aforementioned reasons. If the extension rate in the preforming stage of the translucent substrate sheet 3 is set extremely higher than 300%, the sheet cannot follow the extension thereof, and the connection portions and so on located between the center key and the frame-shaped key are disadvantageously reduced in thickness, possibly causing a break in the course of long-term use or no restoration property of the key to the original position (undepressed position, see the undepressed position II of Fig. 22) during use (when depressed, see the depressed position I of Fig. 22). Conversely, if the extension rate in the preforming stage of the translucent substrate sheet 3 is suppressed to less than 200%, the click feeling when the key is depressed by a finger becomes stiff. The present inventor fabricated multicontact key sheet members for the decoration sheets preformed at various extension rates using the translucent substrate sheet 3 of the optimum construction and tried to evaluate the click feeling, key stroke property (key-rubbing property), and restoration property. As a result, the inventor found out that the key sheet member tolerated the long-term use thereof if the protruding portions of the multicontact key configuration were formed by extending the sheet within the extension rate range of 200 to 300% as described below.

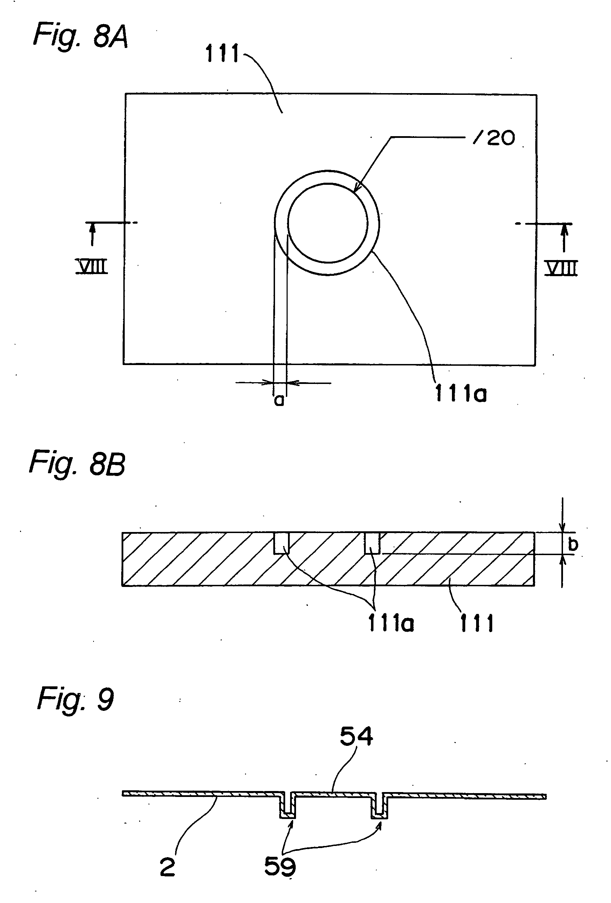

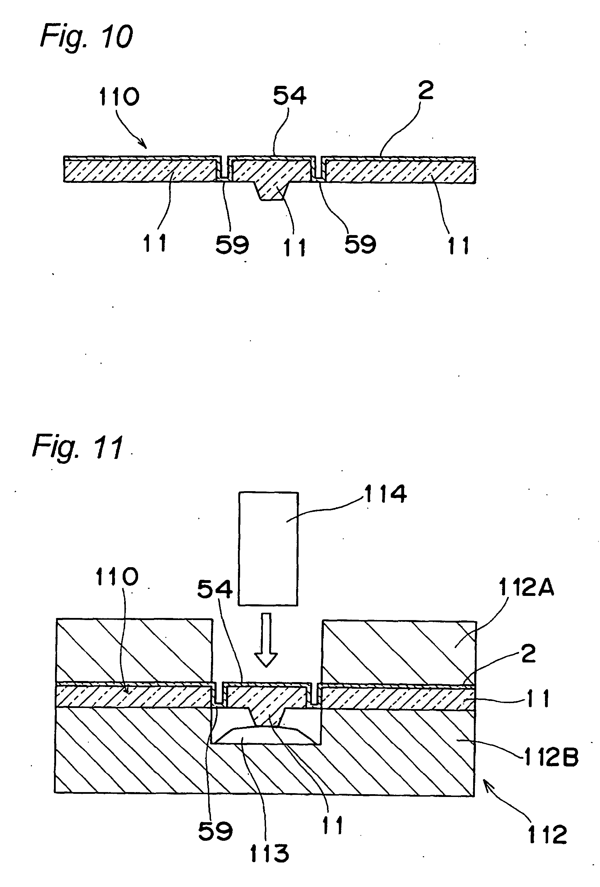

The evaluation methods of click feeling, key stroke property, and restoration property are as follows. It is to be noted that the key sheet member 110 for evaluation is formed as follows. That is, by sucking the decoration sheet 2 that employs the aforementioned substrate sheet 3 of the optimum construction of Fig. 3 to an evaluation sample-producing suction die 111 (see Figs. 8A and 8B) that has an annular recess portion 111a of a width dimension "a" and a depth "b" at its center through many suction holes thereof and forming an annular connection section 59 as a consequence of partially drawing the decoration sheet 2 into the annular recess portion 111a, the sheet is preformed into a configuration in which the center key 54 is formed (see Fig. 9). Subsequently, by further integrating the decoration sheet 2 with the resin member 11 excluding the connection section 59 at the periphery of the center key 54, a key sheet member 110 for evaluation is formed (see Fig. 10).

### <Evaluation of Click Feeling>

The key sheet member 110 for evaluation was set so as to be placed between an upper section 112A and a lower section 112B of a jig 112 for evaluation (see Fig. 11) having a metal dome 113 on the bottom surface at a center recess portion, and thereafter, an input test of the center key 54 of the key sheet member 110 for evaluation was conducted with a finger. The click feeling when the center key 54 was depressed was determined on the standard of a depression load of 400 g ± 20 g, and the load within the range was determined to be "good". In this case, the metal dome is a thin dish-shaped metal contact component that has an outside diameter of about 5 mm, a bending height of about 0.25 mm, and a thickness of about 60 µm and has a click feeling function and a switching function. With regard to a method for measuring the load at the time of clicking, the key sheet member 110 for evaluation was set on the jig 112 for evaluation and thereafter depressed at the center key 54 by a key stroke jig 114 having a diameter φ of 10 mm, and a resistance load when the key was depressed by a depression stroke of 0.4 mm was measured.

### <Evaluation of Key Stroke Property>

The key sheet member 110 for evaluation was set on the jig 112 for evaluation having the metal dome 113 so that the center key 54 of the display section 110 was positioned above the metal dome 113, and thereafter, a key stroke test was conducted on the center key 54 with a cylindrical key stroke jig 114 having a diameter φ of 10 mm with a load of 400 g/cm² and a depression stroke of 0.4 mm at a rate of two times per second. The key stroke property was determined according to whether or not the connection section 59 located at the periphery of the center key 54 broke before the number of strokes exceeds the standard frequency of 50000 times.

### <Evaluation of Restoration Property>

After surviving the aforementioned key stroke test, the restoration property was determined according to whether or not the center key 54 was restored into the original position.

The evaluation results are shown in Table 1 below.

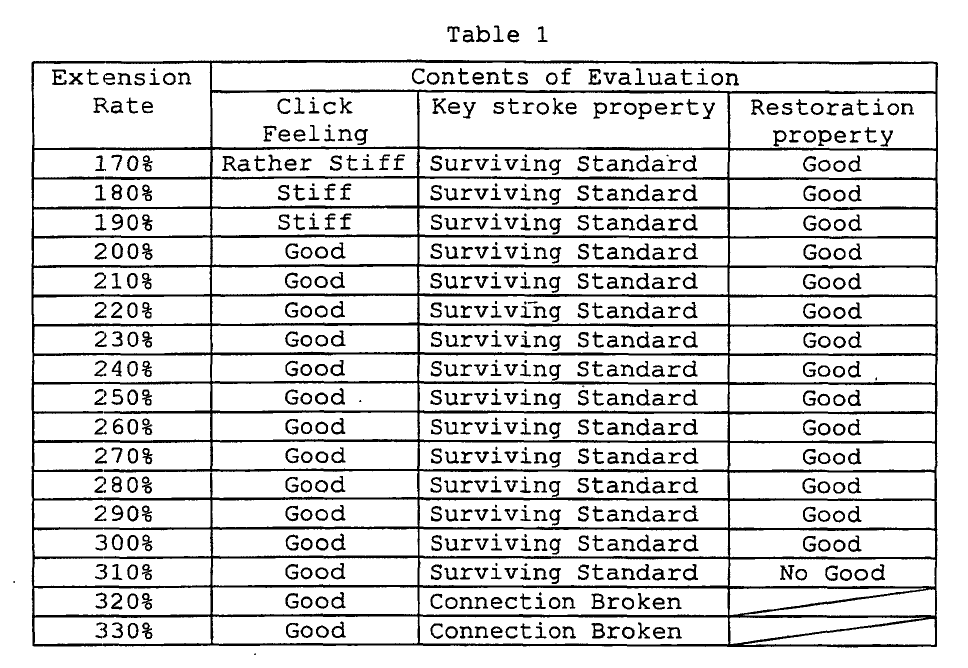

As understood from the evaluation results, with the decoration sheet 2 employing the translucent substrate sheet 3 of the optimum construction shown in Fig. 3 described above, each of the good ones had the protruding center key 54 of the multicontact key configuration extended within the extension rate range of 200 to 330% with regard to the click feeling, within the extension rate range of 170 to 310% with regard to the key stroke property, and within the extension rate range of 170 to 300% with regard to the restoration property. That is, it can be understood that the satisfactory range of the extension rate is 200 to 300% with regard to all the items of evaluation.

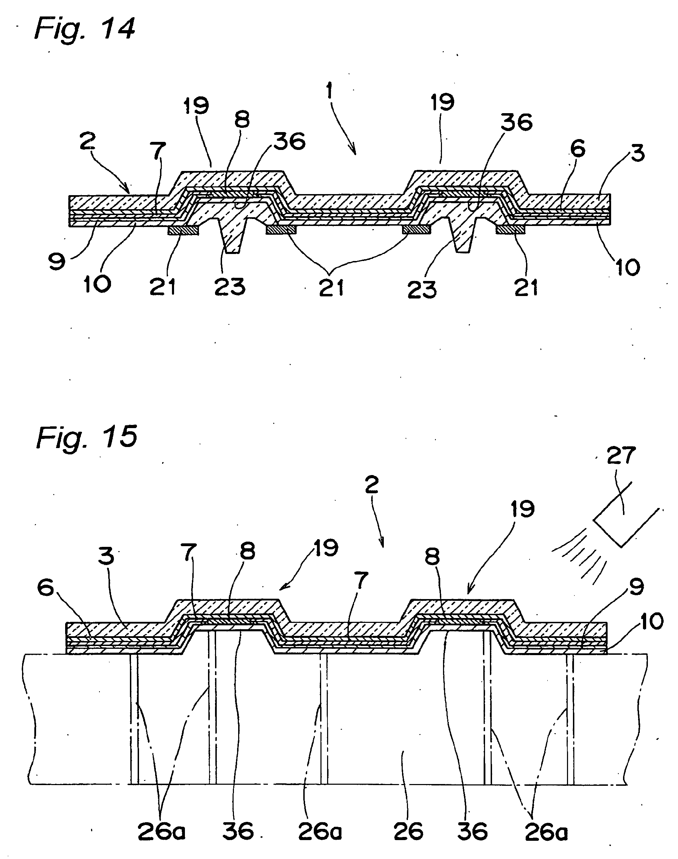

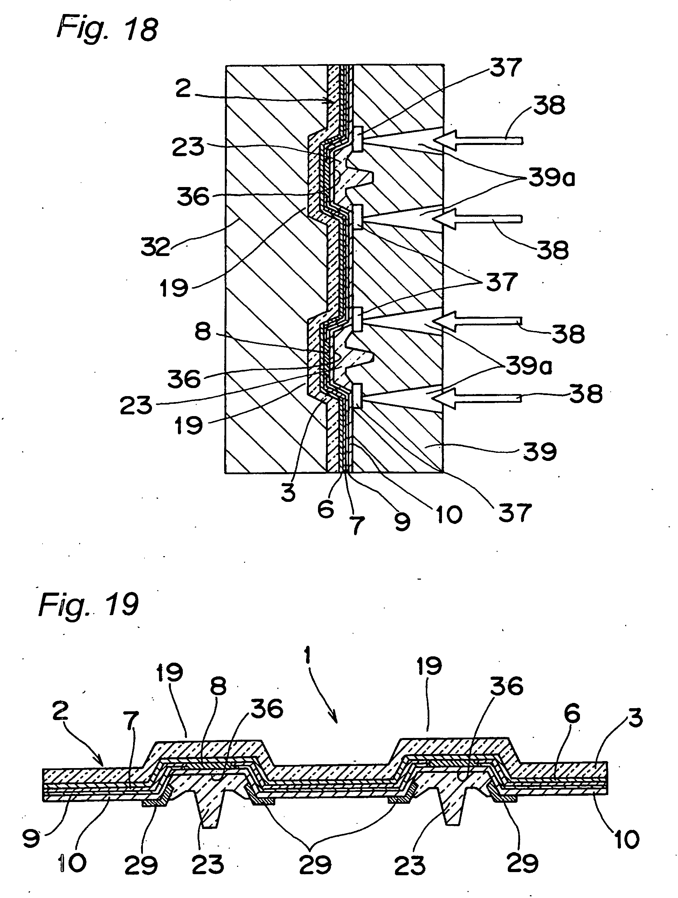

Moreover, with regard to the key sheet member 1 of the first embodiment of the present invention, the key sheet member 1 to be frequently used may be reinforced by backing the substrate sheet 3 with the rubber elastic layer 21 or 29 in the vicinity of the peripheries of the key button sections 19 as shown in Figs. 14 and 19 for the aforementioned reasons. As a first mode of the above-mentioned reinforcement with the rubber elastic layer, there is one as shown in Fig. 14, in which the rubber elastic layer 21 is constructed of a mold resin layer and positioned so as to extend over the outside portions of the peripheries of the recess portions 36 on the back surfaces of the key button sections 19 and the peripheral portions of the back surfaces of molded pieces 23 for maintaining the button configuration (corresponding to the transparent resin members 11 of Fig. 1). As a second mode, there is one as shown in Fig. 19, in which the rubber elastic layer 29 is constructed of a printed layer and positioned so as to extend over the outside portions of the peripheries of the recess portions 36 on the surface located on a patterned layer (e.g., any one of the metal thin film layer 7, the light-shielding colored layer 9, and the bonding layer 10) of the substrate sheet 3 and the inside portions of the peripheries located adjacent to the outside portions of the peripheries.

In order to form the key sheet member 1 of the first mode by utilizing the decoration sheet 2 of the aforementioned construction, it is proper to do as follows as shown in Figs. 14 through 18.

First of all, as shown in Fig. 15, a decoration sheet 2 in which at least a patterned layer (e.g., any one of the metal thin film layer 7, the light-shielding colored layer 9, and the bonding layer 10) is provided on one surface of the substrate sheet 3 having excellent rigidity is three-dimensionally molded by means of a three-dimensional forming die 26 so as to form the key button sections 19 protruding in prescribed positions on the substrate sheet 3 side located on the upper surface side. As the three-dimensional forming die 26, there is used one, which is provided with suction holes 26a and of which the convex type or concave type is selected according to the configuration of the molded pieces 23 for maintaining the button configuration desired to be molded. The three-dimensional forming is carried out by softening by heating the decoration sheet 2 with a heat source 27 arranged inside and/or outside the three-dimensional forming die 26 and making the sheet closely fit to the surface of the three-dimensional forming die 26 by vacuum suction and/or pressure forming through the suction holes 26a. As a result, the decoration sheet 2 three-dimensionally molded has a plurality of key button sections 19, and the recess portions 36 for the molding resin are formed on the lower side of each of the key button sections 19.

Next, the decoration sheet 2 three-dimensionally molded is placed between metal dies 32 and 33 for injection molding of the molded pieces 23 for maintaining the button configuration. In the above case, it is acceptable to feed separated decoration sheets 2 one by one in sheet form or intermittently feed the necessary portions of an elongated decoration sheet 2.

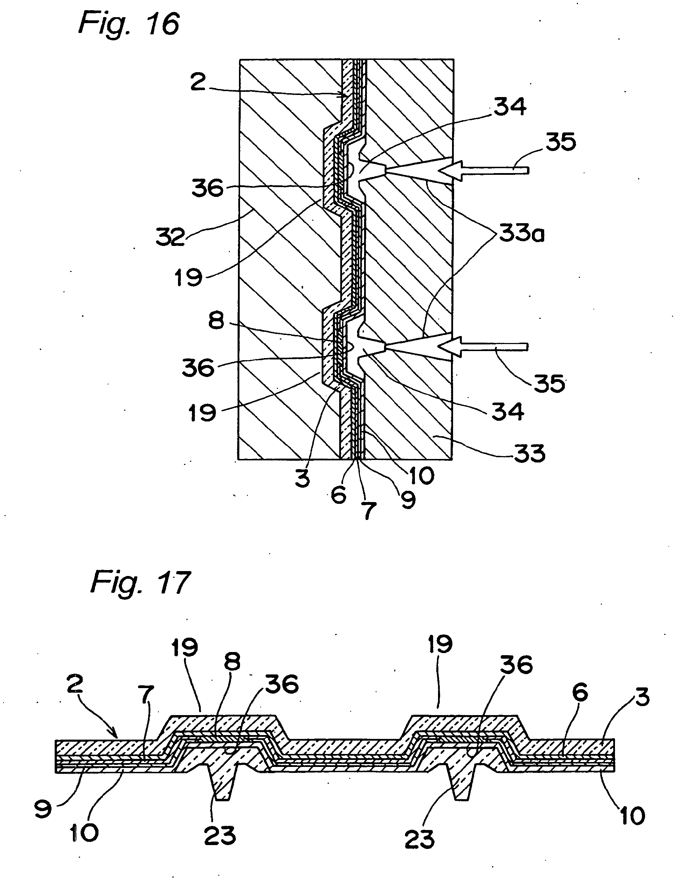

Next, as shown in Fig. 16, the metal dies 32 and 33 are closed to form cavities 34 between the recess portions 36 existing on the back surface side of the key button sections 19 of the decoration sheet 2 and the metal die 33 that has gate portions 33a. A molding resin 35, which is made of a hard resin and put in a molten state, is injected into the cavities 34 as indicated by the arrows, and the molding resin 35 put in the molten state is solidified, molding the button configuration maintaining molded pieces 23 (corresponding to the transparent resin members 11 of Fig. 1) inside the cavities 34. Concurrently with this, as shown in Fig. 17, the button configuration maintaining molded pieces 23 are bonded to the recess portions 36 existing on the back surface side of the key button sections 19 of the decoration sheet 2 so as to be integrated into a body. In this case, with regard to the molding resin of the hard resin, the molding resin 35 that becomes the button configuration maintaining molded pieces 23 is a synthetic resin of polycarbonate, acrylic, ABS, or the like, which prevents scratches during input with a nail or a pen point.

Next, the metal dies 32 and 33 are opened so as to leave the decoration sheet 2 integrated with the button configuration maintaining molded pieces 23 inside the metal die 32. When the metal dies 32 and 33 are opened, either one movable side metal die among the metal dies 32 and 33 is moved in a direction in which the die moves apart from the fixed metal die located on the other side to open both the metal dies 32 and 33. After the metal dies 32 and 33 are opened, the metal die 33 that has the gate portions 33a is replaced by a different metal die 39 that has gate portions 39a. As shown in Fig. 18, the different metal die 39 and the metal die 32 are tightly closed, forming doughnut-shaped cavities 37 each of which is positioned so as to extend over the outside portion of the periphery of each recess portion 38 of the decoration sheet 2 and the back surface of each button configuration maintaining mold piece 23 located adjacent to the outside portion of the periphery between the decoration sheet 2 onto which the button configuration maintaining molded pieces 23 have been integrally bonded and the different metal die 39. A molding resin 38, which is made of a rubber elastic material and put in a molten state, is injected into the cavities 37 through the gate portions 39a of the different metal die 39, and the molding resin 38 in the cavities 37 is solidified. Through the above process, the rubber elastic layer 21 is integrally bonded to the decoration sheet 2 in the position where the layer extends over the outside portions of the peripheries of the recess portions 38 and the back surfaces of the button configuration maintaining molded pieces 23, obtaining the key sheet member 1 shown in Fig. 14. As the molding resin 38 that becomes the rubber elastic layer 21, there is used a thermoplastic elastomer resin of the polyester system, the polyurethane system, the polyolefin system, or the like in order to disperse key stroke stresses in the portions on which the key stroke stresses are concentrated at the time of inputting or to tie both portions when the substrate sheet 3 is broken. Moreover, in order to provide a light-shielding property to the key sheet member 1, it is acceptable to knead a coloring pigment of carbon black or the like in the molding resin 38 that becomes the rubber elastic layer 21.

In the process of molding the rubber elastic layer 21, the metal die 33 that has the gate portions 33a used in the process of molding the button configuration maintaining molded pieces 23 is merely replaced by the different metal die 39 that has the gate portions 39a. However, it is also acceptable to once take the decoration sheet 2 integrated with the button configuration maintaining molded pieces 23 out of the pair of the metal dies 32 and 33 after the molding of the button configuration maintaining molded pieces 23 and subsequently place the sheet between a different pair of metal dies for the molding of the rubber elastic layer 21.

Moreover, in order to obtain the key sheet member 1 of the second mode, it is proper to do as follows as shown in Figs. 19 through 21.

First of all, as a decoration sheet 2, there is fabricated one in which the rubber elastic layer 29 is provided in the position where the layer extends over the outside portions of the peripheries and the inside portions of the peripheries of the recess portions 36 on the surface located on the patterned layer (e.g., any one of the metal thin film layer 7, the light-shielding colored layer 9, and the bonding layer 10) side of the substrate sheet 3 in addition to the aforementioned construction. This rubber elastic layer 29 may be provided between the substrate sheet 3 and a printed layer or a coated layer formed on the sheet or provided between any ones of the layers. As shown in Fig. 19, the rubber elastic layer may also be provided as an outermost layer. As the rubber elastic layer 29, there is used a transparent thermoplastic elastomer resin of the polyester system, the polyurethane system, the polyolefin system, or the like in order to disperse key stroke stresses in the portions on which the key stroke stresses are concentrated at the time of inputting or to tie both portions when the substrate sheet 3 is broken. As a method for forming the rubber elastic layer 29, it is proper to use an ordinary printing method such as an offset printing method, a gravure printing method, and a screen printing method.

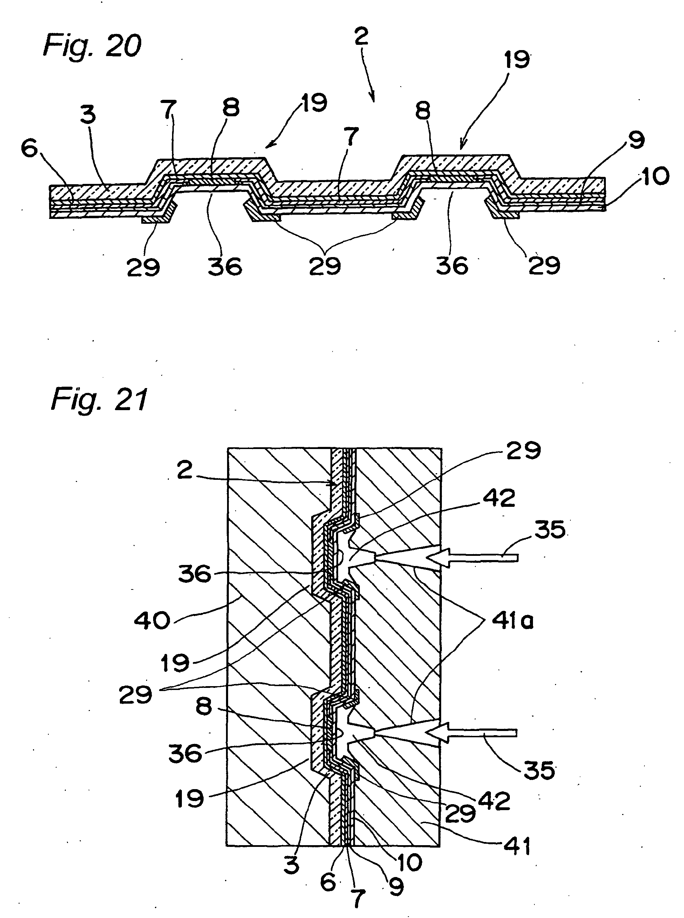

Subsequently, similarly to the first mode, three-dimensional forming is carried out by means of the three-dimensional forming die 26 so as to form the key button sections 19 protruding in prescribed positions on the substrate sheet 3 side located on the upper surface side as shown in Fig. 20.

Next, similarly to the first mode, the decoration sheet 2, which has been three-dimensionally molded, is placed between metal dies 40 and 41 for injection molding of the button configuration maintaining molded pieces 23.

Next, similarly to the first mode, the metal dies 40 and 41 are closed as shown in Fig. 21, forming cavities 42 between the recess portions 36 existing on the back surface side of the key button sections 19 of the decoration sheet 2 and the metal die 41 that has gate sections 41a. The molding resin 35, which is made of a hard resin and put in the molten state, is injected into the cavities 42, and then, the molding resin 35 is solidified, forming the button configuration maintaining molded pieces 23 inside the cavities 42. Concurrently with this, the molded pieces 23 are integrally bonded to the recess portions 36 existing on the back surface side of the key button sections 19 of the decoration sheet 2, obtaining the key sheet member 1 shown in Fig. 19.

Moreover, in either the first mode or the second mode, the key sheet member 1 is obtained, and this is thereafter taken out of the metal dies. However, it is possible to trim the decoration sheet 2 of the key sheet member 1 as needed after taking the key sheet member out of the metal dies. If the decoration sheet 2 is punched into the desired configuration before the decoration sheet 2 is placed in the metal dies, there is no need to trim the decoration sheet 2. Moreover, the aforementioned metal dies for injection molding can be applied to either a vertical injection molding press or a horizontal injection molding press.

In the key sheet member 1 of the first embodiment of the present invention, as described above, the substrate sheet 3 is reinforced by being backed with the rubber elastic layer 21 or 29 in the vicinity of the peripheries of the key button sections 19 as shown in Figs. 14 and 19. Therefore, the key stroke stresses in the portions on which the key stroke stresses are concentrated at the time of inputting are dispersed by the rubber elastic layer 21 or 29, and both portions are tied together when the substrate sheet 3 is broken by the rubber elastic layer 21 or 29. Therefore, the key sheet member 1 of the first embodiment of the present invention has an excellent key stroke characteristic function capable of tolerating the long-term use thereof.

The metal thin film layer 7 is a layer for expressing a metallic luster color. According to the metallic luster color desired to be expressed, it is proper to form the metal thin film layer 7 by a vacuum deposition method, a sputtering method, an ion plating method, a plating method, or the like while using a metal of aluminum, nickel, gold, platinum, chromium, iron, copper, tin, indium, silver, titanium, lead, zinc, or the like; or an alloy or a compound of these materials.

The metal thin film layer 7 is preferably formed with a thickness such that the visible light transmittance falls within a range of 1 to 30%. This is because the optical transparency at the time of backlighting is hindered if the visible light transmittance of the metal thin film layer 7 falls short of one percent and the metallic luster feeling is impaired if the visible light transmittance of the metal thin film layer 7 exceeds thirty percent. It is to be noted that the visible light transmittance of the metal thin film layer 7 of the present invention means the visible light transmittance of the single body of the metal thin film layer 7 unless otherwise specified. Moreover, in terms of the manufacturing process, the metal thin film layer 7 is preferably formed with a film thickness of 10 to 40 nm. This is because film thickness control during the deposition process is difficult when the film thickness of the metal thin film layer 7 falls short of ten nanometers and there is concern about corrosion when the film thickness of the metal thin film layer 7 exceeds forty nanometers.

The metal thin film layer 7 is formed overall or partially. By partially forming the metal thin film layer 7, patterns of characters, symbols, and so on can be expressed when a light source is arranged on the back surface side of the key sheet member 1. As a method for partially forming the metal thin film layer 7, there is an etching method for partially forming a masking layer on the metal thin film layer 7 formed overall on the substrate sheet 3 by the screen printing method or the like, thereafter immersing the sheet in an acid or alkali aqueous solution and then removing the metal layer other than the laminated portion. Moreover, there is a laser marking method for forming the metal thin film layer 7 and a light-shielding layer overall on the substrate sheet 3 and thereafter removing the metal thin film layer 7 and the light-shielding layer to the desired pattern configuration by a laser beam. Moreover, it is acceptable to form the light-shielding colored layer 9 in order to give a certain light-shielding property to the metal thin film layer 7. The light-shielding colored layer 9 may be formed by concurrently using the layer as the masking layer when the metal thin film layer 7 is partially formed (see Fig. 1).

Moreover, when there is required interlayer close adhesion reinforcement between the substrate sheet 3 and the metal thin film layer 7, it is acceptable to provide an anchor layer 6 (see Fig. 4). As the anchor layer 6, there can be used a thermosetting resin such as a two-part curing type urethane resin, a melamine based resin, or an epoxy based resin; or a thermoplastic resin such as a vinyl chloride copolymer resin. As a method for forming the anchor layer 6, there are coating methods such as a gravure coating method, a roll coating method, and a comma coating method and printing methods such as a gravure printing method and a screen printing method. Moreover, by coloring the anchor layer 6, metallic luster can be colored.

Moreover, it is acceptable to express characters, symbols, patterns, and so on by providing a patterned layer (e.g., any one of the metal thin film layer 7, the light-shielding colored layer 9, and the bonding layer 10). As a material for the patterned layer, it is proper to use a resin such as a polyvinyl based resin, a polyamide based resin, a polyester based resin, an acrylic based resin, a polyurethane based resin, a polyvinyl acetal based resin, a polyesterurethane based resin, a cellulose ester based resin, or an alkyd resin as a binder and use a coloring ink that contains a pigment or dye of the appropriate color as a coloring agent. As a method for forming the patterned layer, it is proper to use an ordinary printing method such as the offset printing method, the gravure printing method, or the screen printing method. It is proper to partially form the patterned layer according to the pattern desired to be expressed.

Moreover, when the metal thin film layer 7 is partially formed, it is proper to provide a light-transmitting colored layer 8 that has a visible light transmittance of 50 to 95% to be formed in the other portions (see Figs. 2 through 4). By forming the light-transmitting colored layer 8 in the aforementioned portion where the metal thin film layer 7 is not formed, the patterns of colored characters, symbols, and so on can be expressed when the light source is arranged on the back surface side of the key sheet member 1. The resin for forming the light-transmitting colored layer 8 is properly employed by being selected from thermoplastic resins or thermosetting resins.

Moreover, the bonding layer 10 may be formed as needed (see Fig. 4). The bonding layer 10 may be transparent, translucent, or colored. Moreover, the bonding layer 10 may be colored so as to be concurrently used as the light-shielding colored layer 9 or the light-transmitting colored layer 8. The bonding layer 10 is the layer for bonding the aforementioned layers onto the transparent resin members 11. As the bonding layer 10, a thermosensitive or pressure-sensitive resin suitable for the material of the transparent resin members 11 is properly used. For example, when the material of the transparent resin members 11 is made of a polycarbonate resin, it is proper to use an acrylic based resin, a polystyrene based resin, a polyamide based resin, or the like, which has an affinity for these resins. As a method for forming the bonding layer 10, there are included coating methods such as the gravure coating method, the roll coating method, and the comma coating method, and printing methods such as the gravure printing method and the screen printing method. Moreover, it is also possible to provide the bonding layer 10 by sticking sheets that have an adhesive characteristic constructed of the above-mentioned materials together by a laminating method or the like.

The decoration sheet 2 constructed as above becomes the key sheet member 1 by being integrated with the plurality of transparent resin members 11 that become the key button sections 19. In order to obtain the key sheet member 1, it is proper to arrange the decoration sheet 2 inside the metal dies 12 where the cavities are formed by one metal die 12 that has the recess portions 36 forming the key button sections 19 of the key sheet member 1 and the other metal die 12 that has the gates for forming the transparent resin members 11 positioned on the back surface of the key sheet member 1, and inject a molten resin into the metal dies 12, integrating the decoration sheet 2 with the molten resin.

First of all, as shown in Fig. 5, the decoration sheet 2 is sent into the metal dies 12 for molding.

The metal dies 12 to be used are able to constitute cavities 12c of one metal die 12A that has recess portions 12a forming the key button sections 19 of the key sheet member 1 and the other metal die 12B that has gates 12b for forming the transparent resin members 11 positioned on the back surface of the key sheet member 1. In the above case, it is acceptable to provide a metal die embossing 13 on the surface of each recess portion 12a of the metal die 12A as needed.

The decoration sheet 2 is placed between the metal dies 12A and 12B by means of a decoration sheet feed unit or the like and then fixed by means of a clamp or the like. It is acceptable to soften by heating the decoration sheet 2 with a heat source and make the sheet closely adhere to the cavity surface by vacuum suction.

Next, as shown in Fig. 6, the metal dies 12A and 12B for molding are closed, and thereafter, the molten resin is injected from the gates 12b into the cavities 12c of the metal dies 12A and 12B and filled thereinto, bonding the decoration sheet 2 to the surface of the transparent resin members 11 concurrently with the molding of the resin members 11. When the metal die embossing 13 is provided in the recess portions 12a of the metal die 12A, the pits and projections of the metal die embossing 13 are received on the surface of the decoration sheet 2 by heat and pressure from the molten resin.

For the transparent resin members 11, it is preferable to use a polycarbonate resin that has excellent transparency, heat resistance, and impact resistance. Moreover, it is possible to employ a general resin such as acrylonitrile-butadiene-styrene copolymer resin, which can be used as the transparent resin members 11 of the key sheet member 1.

By solidifying the molten resin and thereafter opening the metal dies, the key sheet member 1 of Fig. 1, in which the decoration sheet 2 is integrated with the transparent resin members 11, can be obtained.

Moreover, insert molding can be carried out as follows. First of all, the decoration sheet 2 is fixed to a preforming die that has recess portions of a configuration identical to that of the key button sections by means of a clamp or the like, and the decoration sheet 2 is next softened by heating with a heat source and concurrently subjected to vacuum suction to make the sheet closely adhere to the surface of the preforming die. Next, the vacuum suction is released, and the decoration sheet 2 is taken out of the preforming die. As described above, the preformed decoration sheet 2 can be obtained. Next, the preformed decoration sheet 2 is arranged between the metal dies 12 and fixed by means of a clamp or the like. Next, the metal dies 12 are tightly closed, and the molten resin is injected to mold a mold resin. By solidifying the transparent resin members 11 and thereafter opening the dies, the key sheet member 1 in which the decoration sheet 2 is integrated with the transparent resin members 11 can be obtained.

### (Working Example 1)

A 130-µm thick polycarbonate/polybutylene terephthalate alloy film (Bayfol film produced by Bayer Ltd.), which had a visible light transmittance of 80% and a haze of 10% and on the surface of which minute pits and projections were formed, was served as a translucent substrate sheet, and an anchor layer made of acrylic polyol was formed on it. Next, aluminum was deposited overall to form a metal thin film layer. Next, a light-shielding colored layer was formed overall by the screen printing method using a black ink (SG410 produced by Seiko Advance Ltd.) made of a two-part curing type urethane based resin and dried with hot blast at a temperature of 80°C for five minutes. Next, an adhesive layer made of a vinyl chloride-vinyl acetate copolymer based resin was formed overall by the screen printing method and dried at a temperature of 80°C for two hours to obtain a decoration sheet.

The thus-obtained decoration sheet was preformed into a three dimensional configuration by a high-pressure molding method. Next, the sheet was placed in molding dies that have a cavity configuration corresponding to this three dimensional configuration, and a polycarbonate resin (Makrolon 2205 produced by Bayer Ltd.) was injected as a molten resin and solidified by cooling to obtain a key sheet member.

The surface of the thus-obtained key sheet member had a uniform matted tone metallic luster and excellent surface strength.

### (Working Example 2)

A 100-µm thick polyethylene terephthalate film, which had a visible light transmittance of 90% and a haze of 8% and was blended with twenty percent by weight of titanium oxide fine particles as a light diffusing material, was served as a translucent substrate sheet, and a two-part curing type urethane based resin was coated on the translucent substrate sheet to carry out an easy bonding process. Next, an anchor layer made of acrylic polyol was formed on it. Next, aluminum was deposited overall to form a metal thin film layer. Next, a light-shielding colored layer was partially formed by the screen printing method using a black ink (SG410 produced by Seiko Advance Ltd.) made of a two-part curing type urethane based resin and dried with hot blast at a temperature of 80°C for five minutes. Next, the sheet and layers were immersed in an alkaline solution to remove the metal thin film layer in the portions that were not covered with the light-shielding colored layer to form a light-transmitting pattern. Next, a light-transmitting colored layer was formed with a two-part curing type urethane ink so as to cover the light-transmitting pattern. Next, an adhesive layer made of a vinyl chloride-vinyl acetate copolymer based resin was formed overall by the screen printing method and dried at a temperature of 80°C for two hours to obtain a decoration sheet.

The thus-obtained decoration sheet was preformed into a three dimensional configuration by the high-pressure molding method. Next, the sheet was placed in molding dies that have a cavity configuration corresponding to this three dimensional configuration, and a polycarbonate resin (Makrolon 2205 produced by Bayer Ltd.) was injected as a molten resin and solidified by cooling to obtain a key sheet member.

The surface of the thus-obtained key sheet member had a uniform matted tone metallic luster and excellent surface strength.

The present invention constructed as above therefore has the effects as follows.

In the key sheet member of the present invention, the decoration sheet, in which at least the metal thin film layer is laminated on the back surface side of the translucent substrate sheet that has a visible light transmittance of 80 to 93% and a haze of 5 to 50%, is integrated with the plurality of transparent resin members that become the plurality of key button sections. This key sheet member therefore has excellent surface strength also capable of tolerating the long-term use thereof.

The key sheet member manufacturing method of the present invention includes arranging the decoration sheet, in which at least the metal thin film layer is laminated on the back surface side of the translucent substrate sheet that has a visible light transmittance of 80 to 93% and a haze of 5 to 50%, in the metal dies that constitute the cavities defined by one metal die that has the recess portions for forming the key button sections of the key sheet member and the other metal die that has the gates for forming the transparent resin member positioned on the back surface of the key sheet member, and injecting the molten resin into the metal dies, thereby integrating the decoration sheet with the molten resin. With this arrangement, there can easily be obtained a key sheet member that has a metallic luster of a uniform matted pattern, a hairline pattern, or the like and excellent surface strength also capable of tolerating the long-term use thereof.

By properly combining the arbitrary embodiments of the aforementioned various embodiments, the effects possessed by the embodiments can be produced.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A key sheet member (1) which can be obtained by setting a decoration sheet (2) in a prescribed position, preforming the sheet into a three dimensional configuration so that the sheet is protruded on a translucent substrate sheet (3) side and a plurality of key button sections (19) are formed, subsequently placing the sheet in molding dies (12) and injecting a molten resin to integrate the transparent molten resin comprised of the plurality of key button sections (19) with the decoration sheet,
the key sheet member being integrated with the plurality of transparent resin sections that become the key button sections in which at least a metal thin film layer (7) is laminated on a back surface side of the translucent substrate sheet (3) that has a visible light transmittance of 80 to 93% and a haze of 5 to 50%.

2. The key sheet member as claimed in claim 1, wherein the translucent substrate sheet (3) is a resin film that has a thickness of 50 to 250 µm and is selected from a group consisting of polyamide, polyimide, olefin, urethane, polycarbonate/polybutylene terephthalate alloy resin, and polycarbonate/polyethylene terephthalate alloy resin; and an extension rate of the decoration sheet (2) preformed so that the key button sections (19) are formed in a three dimensional configuration falls within a range of 200 to 300%.

3. The key sheet member as claimed in claim 2, wherein the key button sections (19) are reinforced by being backed with a rubber elastic layer (21, 29) in a vicinity of peripheries thereof.

4. The key sheet member as claimed in claim 3, wherein the rubber elastic layer (21) is comprised of a mold resin layer and positioned so as to extend over outside portions of peripheries of the key button sections of the decoration sheet and a back surface of a molded piece for maintaining a configuration of the button.

5. The key sheet member as claimed in claim 3, wherein the rubber elastic layer (29) is comprised of a printed layer and positioned so as to extend over outside portions of peripheries and inside portions of peripheries of the key button sections of the decoration sheet on a surface located on a patterned layer side of the substrate sheet.

6. The key sheet member as claimed in any one of claims 1 through 5, wherein the translucent substrate sheet (3) contains one to thirty percent by weight of a light diffusion material.

7. The key sheet member as claimed in claim 6, wherein the translucent substrate sheet (3) is laminated with a light diffusion layer (5) that contains one to thirty percent by weight of a light diffusion material on an upper surface side of a transparent substrate sheet (4).

8. The key sheet member as claimed in any one of claims 1 through 5, wherein the metal thin film layer (7) has a visible light transmittance of one to thirty percent and is formed partially or overall.

9. The key sheet member as claimed in claim 7, wherein the light diffusion layer (5) is formed on the decoration sheet (2), and a visible light transmittance of three layers of the translucent substrate sheet (3), the metal thin film layer (7), and the light diffusion layer (5) falls within a range of 10 to 30%.

10. The key sheet member as claimed in any one of claims 1 through 5, wherein the translucent substrate sheet (3) has a minute pits-and-projections portion on the surface thereof.
